# EUROPÄISCHE PATENTSCHRIFT

(11) **EP 1 035 337 B1**
(45) Veröffentlichungstag und Bekanntmachung des Hinweises auf die Patenterteilung: **09.02.2005**
(21) Anmeldenummer: 00103668.0
(22) Anmeldetag: 22.02.2000
(51) Int. Cl.: F16C 11/06, B62D 7/16

(54) **Kugelgelenk**
Ball joint
Articulation à rotule

(30) Priorität: 10.03.1999 DE 19910689
(43) Veröffentlichungstag der Anmeldung: 13.09.2000
(73) Patentinhaber: ZF Lemförder Metallwaren AG, 49448 Lemförde (DE)
(72) Erfinder: Gräber, Jürgen, Dr., 32351 Stemwede-Dielingen (DE); Warnken, Klaus, 28203 Bremen (DE)

(56) Entgegenhaltungen:
- CH-A- 465 971
- DE-C- 925 328
- DE-C- 3 632 265
- DE-C- 3 930 741
- GB-A- 984 975

## Beschreibung

Die Erfindung betrifft ein Kugelgelenk nach dem Oberbegriff des Patentanspruches 1, wie es insbesondere bei Radaufhängungen von Kraftfahrzeugen zum Einsatz kommt.

Ein derartiges Kugelgelenk ist beispielsweise aus der DE 39 30 741 C1 bekannt. Die Lösung umfaßt ein Gehäuse mit einer Aufnahmeöffnung, in die eine Lagerschale eingesetzt ist. Innerhalb der Lagerfläche dieser Lagerschale ist ein Kugelzapfen über eine daran angeformte Gelenkkugel allseitig beweglich aufgenommen. Der Kugelzapfen geht unterhalb der Gelenkkugel in einen Übergangsbereich über, woran sich ein konischer Abschnitt und ein daran endseitig vorhandener Anschlußbereich anschließen. Der konische Abschnitt des Kugelzapfens wird dabei in das Kraftfahrtzeugbauteil eingesetzt, welches später mit dem Kugelgelenk verbunden werden soll. Ferner ist dieses Kugelgelenk mit einem Dichtungsbalg zwischen dem Gehäuse und dem Kugelzapfen ausgestattet, dessen eines Ende am Umfange eines Gehäuses befestigt ist und dessen anderes Ende mit einem Randprofil in ein Profil eines auf einem Kugelzapfen festhaftend angeordneten Halterings drehbeweglich eingreift. Bezogen auf die Mittenlinie des unausgelenkten Kugelzapfens verfügt der Haltering über einen ersten annähernd axialen Schenkel (Axialschenkel) und einen zweiten annähernd radialen Schenkel (Radialschenkel).

Ein weiteres bekanntes Kugelgelenk geht aus der DE 36 32 265 C1 hervor. Der darin zwischen dem Gehäuse und dem Kugelzapfen dichtend angeordnete Dichtungsbalg ist mit seinem zapfenseitigen Randbereich nur teilweise in einem im Querschnitt gesehen L-förmigen Haltering an dem Kugelzapfen festgelegt.

Nachteilig bei einer Ausführung gemäß der DE 36 32 265 C1 ist jedoch, daß der festgesetzte Dichtungsbalg mit seiner äußeren Oberfläche unmittelbar an dem Kraftfahrzeugbauteil anliegt und somit bei Bewegungen des Kugelgelenkes eine Reibung zwischen Dichtungsbalgoberfläche und Kraftfahrzeugbauteil unvermeidbar ist. Da Kugelgelenke als Sicherheitsbauteile von Kraftfahrzeugen über einen langen Lebensdauerzyklus hinweg funktionstüchtig und einsatzbereit sein müssen, ist eine derartige Ausführung mit dem Risiko behaftet, daß der Dichtungbalg infolge der auftretenden Reibung vorzeitig verschleißt, altert und möglicherweise seine vorgeschriebene Dichtfunktion nicht mehr hinreichend erfüllt. Somit besteht die Gefahr, daß Feuchtigkeit und Verunreinigungen in das Gelenkinnere eindringen und das Gelenk letztlich zerstören. Aus der gattungsbildenden CH 465 971 ist darüber hinaus ein Haltering bekannt, der festsitzend auf dem Kugelzapfen angeordnet ist und den Dichtungsbalgrand gleitend aufnimmt.

Der Erfindung liegt die technische Problemstellung zugrunde, ein Kugelgelenk zu entwickeln, welches eine optimale zapfenseitige Abdichtung des Dichtungsbalges ermöglicht.

Diese technische Problemstellung wird mit den kennzeichnenden Merkmalen des Patentanspruches 1 gelöst.
Weitere Ausgestaltungen der Erfindung sind Gegenstand der Unteransprüche.

Der erfindungsgemäße Haltering weist ein im Querschnitt gesehen F-förmiges Profil auf. Bezogen auf die Mittellinie des Kugelzapfens verläuft dabei ein erster Schenkel annähernd in axialer Richtung (Axialschenkel) und ein zweiter Schenkel annähernd in radialer Richtung (Radialschenkel). An dem Axialschenkel des Halteringes ist zumindestens bereichsweise ein umlaufender Ringflansch angeformt. Dieser Ringflansch greift in einen komplementär gestalteten Randbereich des Dichtungsbalges ein. Durch den an dem Haltering angeformten Ringflansch erhält dieser die im Querschnitt gesehen F-förmige Kontur.

Der Ringflansch am Haltering bewirkt ferner, daß die Krafteinleitung durch die Bewegung des Dichtungsbalges während einer Gelenkbewegung und die Abdichtfunktion des Dichtungsbalges getrennt sind. Dies bedeutet, daß die Bewegungen des Dichtungsbalges sich nicht auf dessen Randbereich auswirken, was zu einer erheblichen Verbesserung der Abdichtung führt. Die Einbaulage des Randbereiches wird dementsprechend nur geringfügig oder gar nicht beeinflußt.

Der Radialschenkel stützt sich gemäß einer Ausgestaltung der Erfindung unmittelbar an der Oberfläche des Kraftfahrzeugbauteiles ab. Über diese Anlage erfährt der Haltering eine zusätzliche Stabilisierung.

Um die Abstreifwirkung der Gleitverbindung zwischen Dichtungsbalgrandbereich und Haltering zu verbessern, liegt es im Sinne der Erfindung, im Anlagebereich zwischen Radialschenkel und zapfenseitigem Randbereich des Dichtungsbalges eine Labyrinthdichtung vorzusehen. Die Gleitverbindung kann dabei auch zusätzlich durch an sich bekannte, die Gleitreibung herabsetzende Mittel verbessert werden.

Der an dem Kugelzapfen anliegende Axialschenkel des Halteringes liegt unter elastischer Verformung, wenigstens teilweise an dem Übergangsbereich des Kugelzapfens, an. Vorzugsweise wird zwischen Haltering und Kugelzapfen ein Pressitz vorgesehen, so daß der Haltering mit einem geringen Untermaß auf den zugeordneten Kugelzapfenbereich aufgesetzt ist.

Der gleitend in den Haltering eingesetzte Randbereich des Dichtungsbalges ist erfindungsgemäß zumindest lokal verstärkt ausgeführt. Somit bildet der Dichtungsbalg in diesem Bereich eine Materialwulst. Er drückt unter einer elastischen Vorspannung gegen den Haltering. Durch diese vorteilhafte Verbindung von Dichtungsbalg und Haltering wird eine optimale Dichtwirkung erzielt.

Der Haltering kann beispielsweise aus thermoplastischen Kunststoffen hergestellt sein.

Die durch die Verbindung des Halteringes mit dem Randbereich des Dichtungsbalges geschaffene Gleitfläche bildet eine Dichtfläche, die eine gleichbleibende und korrosionsfreie Oberfläche aufweist.

Der Dichtungsbalg seinerseits weist eine geringfügige axiale Vorspannung auf, sodaß er auch bei maximalen Auslenkungen nicht durch Druck- oder Zugkräfte übergebührlich beansprucht wird. Eine derartige Belastung ist bekanntlich für Elastomermaterialien, insbesondere für Gummi, äußerst schädlich und verschlechtert zudem im Dichtbereich (Labyrinthbereich) die Dichtwirkung, sodaß Druck- oder Zugkräfte weitgehend vermieden werden sollten, was mit einem erfindungsgemäßen Kugelgelenk erstmals erreicht wird.

Um den Randbereich des Dichtungsbalges zusätzlich zu verstärken, ist es darüber hinaus möglich und liegt auch im Bereich des Erfindungsgedankens, innerhalb des Randbereiches zusätzliche Versteifungen einzuformen. Dies können beispielsweise Spannringe aus Kunststoff oder anderen Werkstoffen sein.

Eine bevorzugte erfindungsgemäße Ausführungsform eines Kugelgelenkes wird nachstehend unter Bezugnahme auf die Zeichnungen näher beschrieben.
Es zeigen:
- **Figur 1**:: Ein Kugelgelenk innerhalb eines Radträgers im Teilschnitt
und
- **Figur 2**:: ein erfindungsgemäßes Kugelgelenk, ebenfalls im Teilschnitt.

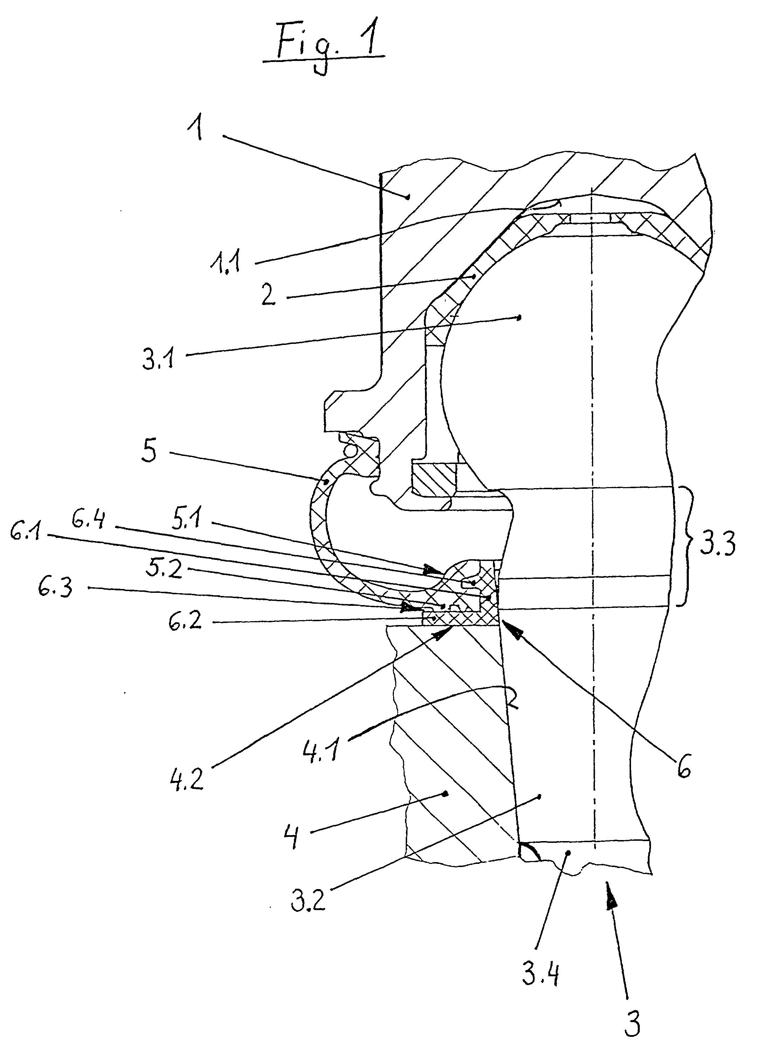

Das in der **Figur 1** gezeigte Kugelgelenk besteht aus einem Gehäuse 1 und einer in die Aufnahmeöffnung 1.1 des Gehäuses eingesetzten Lagerschale 2. Die Lagerschale weist innenseitig eine sphärische Lagerfläche auf in der die Gelenkkugel 3.1 eines Kugelzapfens 3 allseitig beweglich aufgenommen ist. Unterhalb der Gelenkkugel schließt sich ein Übergangsbereich 3.3 an, der in einen konischen Abschnitt 3.2 übergeht. Auf der der Gelenkkugel gegenüberliegenden Seite ist ferner ein Anschlußbereich 3.4 angeordnet. Der Kugelzapfen ist mit seinem konischen Abschnitt 3.2 in eine Aufnahmeöffnung 4.1 des Kraftfahrzeugbauteiles 4 eingesetzt. Die Befestigung des Kugelgelenkes an dem Kraftfahrzeugbauteil 4 erfolgt über den Anschlußbereich 3.4 von der Unterseite des Kraftfahrzeugbauteiles her. Zwischen dem Gehäuse 1 und dem Kugelzapfen 3 ist ein die beweglichen Kugelgelenkteile abdichtender Dichtungsbalg 5 eingesetzt. Ein solcher Dichtungsbalg ist erforderlich, um das Eindringen von Verunreinigungen in die Innenteile des Kugelgelenks wirksam zu verhindern. Der Dichtungsbalg 5 ist mit seinem Randbereich 5.1 in einem Haltering 6 aufgenommen. Dieser Haltering weist eine im Querschnitt gesehen F-förmige Gestalt auf. Dabei verfügt er über einen Axialschenkel 6.1 und einen Radialschenkel 6.2. An dem Axialschenkel 6.1 ist ferner ein Ringflansch 6.4 angeformt.

Der Ringflansch 6.4 ist umlaufend gestaltet. Der Randbereich 5.1 des Dichtungsbalges 5 bildet ferner mit dem Anlagebereich 6.3 des Radialschenkels 6.2 des Halteringes 6 eine Gleitverbindung. Diese Gleitverbindung realisiert in einfacher Weise eine Gleitringdichtung, die beispielsweise eine Labyrintdichtung sein kann, wie dies in der Figur 1 dargestellt ist.

Hierzu wird an dem Anlagebereich 6.3 und dem zugeordneten Randbereich 5.1 jeweils eine labyrintartige Struktur angeformt. Diese Strukturen greifen komplementär ineinander. Der Radialschenkel des Halteringes 6 stützt sich mit seiner äußeren Oberfläche auf der Oberfläche 4.2 des Kraftfahrzeugbauteiles ab. Auch an dieser Verbindung ist somit eine Dichtfläche entstanden.

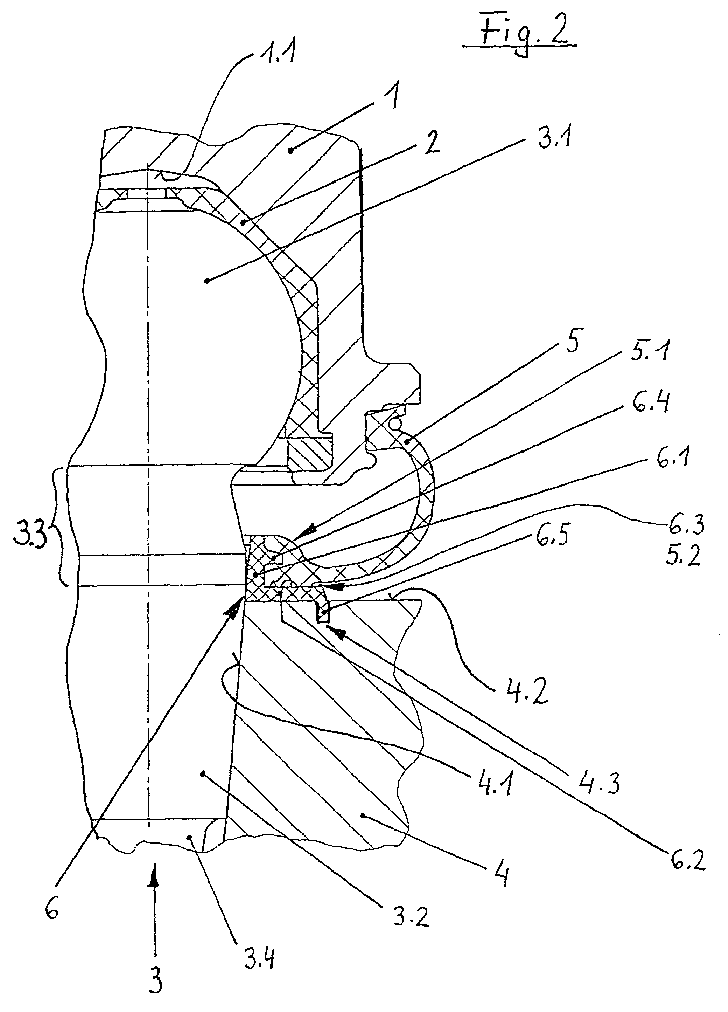

In der **Figur 2** ist eine Auführung eines erfindungsgemäßen Kugelgelenkes gezeigt. Der Haltering 6 weist dabei an dem Radialschenkel 6.2 einen Ringflansch 6.5 auf, der in eine komplementäre Aufnahmenut 4.3 des Kraftfahrzeugbauteiles 4 eingreift. Ansonsten ist das in der Figur 2 dargestellte Kugelgelenk baugleich zu dem in der Figur 1 gezeigten.
Durch eine derartige Gestaltung kann eine verbesserte Dichtfunktion des Gesamtsystems ermöglicht werden.

Wesentliche Merkmale eines erfindungsgemäßen Kugelgelenkes sind jedoch der fest auf dem Kugelzapfen aufsitzende Haltering 6 mit dem daran angeformten Ringflansch 6.4, der den Randbereich 5.1 des Dichtungsbalges 5 in Umfangsrichtung gleitend aufnimmt. Durch eine derartige Ausführung wird neben einer Dichtfunktion auch eine Trennung und damit Entkopplung der Dichtfunktion von der Stützfunktion erreicht, weil der verstärkte Dichtungsbalgrandbereich 5.1 durch den Ringflansch 6.4 in axialer Richtung relativ unbeweglich ist, was eine konstante Vorspannung im Randbereich 5.1 und damit eine optimierte Abdichtung bewirkt.

### Bezugszeichenliste:

- 1: Gehäuse
- 1.1: Aufnahmeöffnung
- 2: Lagerschale
- 3: Kugelzapfen
- 3.1: Gelenkkugel
- 3.2: Konischer Abschnitt
- 3.3: Übergangsbereich
- 3.4: Anschlußbereich
- 4: Kraftfahrzeugbauteil
- 4.1: Aufnahmeöffnung
- 4.2: Oberfläche
- 4.3: Aufnahmenut
- 5: Dichtungsbalg
- 5.1: Randbereich
- 5.2: Labyrinthdichtung
- 6: Haltering
- 6.1: Axialschenkel
- 6.2: Radialschenkel
- 6.3: Anlagebereich
- 6.4: Ringflansch
- 6.5: Ringflansch

## Patentansprüche

1. Kugelgelenk bestehend aus:
- einem Gehäuse (1) mit einer Aufnahmeöffnung (1.1),
- einer darin eingesetzten Lagerschale (2),
- einem Kugelzapfen (3), der in der Lagerschale gelagert ist und seinerseits aus einer Gelenkkugel (3.1), einem konischen Abschnitt (3.2), einem Übergangsbereich (3.3) zwischen Gelenkkugel und konischem Abschnitt sowie einem Anschlußbereich (3.4) besteht, wobei der konische Abschnitt des Kugelzapfens zumindest teilweise in eine Aufnahmeöffnung (4.1) eines Kraftfahrzeugbauteiles (4) eingesetzt ist sowie
- einem Dichtungsbalg (5) zwischen dem Gehäuse und dem Kugelzapfen,
- einem auf dem Kugelzapfen (3) festsitzenden Haltering (6), der den zapfenseitigen Randbereich (5.1) des Dichtungsbalges (5) vollständig gleitend aufnimmt, und im Querschnitt gesehen annähernd eine F-Form aufweist, wobei bezogen auf die Mittenlinie des Kugelzapfens, ein Axialschenkel (6.1) annähernd axial und ein Radialschenkel (6.2) annähernd radial ausgerichtet ist und
der Axialschenkel (6.1) des Halteringes (6) einen zumindest bereichsweise umlaufenden Ringflansch (6.4) aufweist, der in den komplementären Randbereich (5.1) des Dichtungsbalges (5) eingreift
**dadurch gekennzeichnet, dass**
der Haltering (6) an dem Radialschenkel (6.2) zusätzlich einen zumindest bereichsweise umlaufenden Ringflansch (6.5) aufweist, der in eine komplementäre Aufnahmenut (4.3) des Kraftfahrzeugbauteiles (4) eingreift.

2. Kugelgelenk nach Anspruch 1,
**dadurch gekennzeichnet, daß**
sich der Radialschenkel (6.2) an der Oberfläche (4.2) des Kraftfahrzeugbauteiles (4) abstützt.

3. Kugelgelenk nach Anspruch 1 oder 2,
**dadurch gekennzeichnet, daß**
der Anlagebereich (6.3) zwischen dem Radialschenkel (6.2) und dem zapfenseitigen Randbereich (5.1) des Dichtungsbalges (5) eine Labyrinthdichtung (5.2) ist.

4. Kugelgelenk nach einem der vorstehend genannten Ansprüche,
**dadurch gekennzeichnet, daß**
der an dem Kugelzapfen (3) anliegende Axialschenkel (6.1) des Halteringes (6) unter elastischer Verformung wenigstens teilweise an dem Übergangsbereich (3.3) des Kugelzapfens (3) zur Anlage kommt.

5. Kugelgelenk nach einem der vorstehend genannten Ansprüche,
**dadurch gekennzeichnet, daß**
der zapfenseitige Randbereich (5.1) des Dichtungsbalges (5) eine verstärkte Materialwulst bildet, die mit einer elastischen Vorspannung gegen den Haltering (6) drückt.

## Claims

1. Ball-and-socket joint consisting of:
- a housing (1) with a locating opening (1.1),
- a bearing shell (2) which is inserted therein,
- a ball pin (3) which is mounted in the bearing shell and in turn consists of a joint ball (3.1), a conical portion (3.2), a transition region (3.3) between the joint ball and the conical portion as well as a connection region (3.4), wherein the conical portion of the ball pin is inserted at least partly in a locating opening (4.1) of a motor vehicle component (4), as well as
- sealing bellows (5) between the housing and the ball pin,
- a retaining ring (6) which is tightly fitted on the ball pin (3), completely holds the edge region (5.1) of the sealing bellows (5) in a sliding manner and is approximately F-shaped in cross section, wherein, related to the centre line of the ball pin, an axial limb (6.1) is oriented approximately axially and a radial limb (6.2) is oriented approximately radially, and
the axial limb (6.1) of the retaining ring (6) comprises an annular flange (6.4) which circulates at least in certain regions and engages in the complementary edge region (5.1) of the sealing bellows (5),
**characterised in that**
the retaining ring (6) additionally comprises at the radial limb (6.2) an annular flange (6.5) which circulates at least in certain regions and engages in a complementary locating groove (4.3) of the motor vehicle component (4).

2. Ball-and-socket joint according to Claim 1,
**characterised in that**
the radial limb (6.2) is supported at the surface (4.2) of the motor vehicle component (4).

3. Ball-and-socket joint according to Claim 1 or 2,
**characterised in that**
the contact region (6.3) between the radial limb (6.2) and the edge region (5.1) of the sealing bellows (5) which is on the pin side is a labyrinth seal (5.2).

4. Ball-and-socket joint according to any one of the preceding Claims,
**characterised in that**
the axial limb (6.1) of the retaining ring (6) which lies against the ball pin (3) comes to lie at least partly against the transition region (3.3) of the ball pin (3) under elastic deformation.

5. Ball-and-socket joint according to any one of the preceding Claims,
**characterised in that**
the edge region (5.1) of the sealing bellows (5) forms a reinforced material bead which presses against the retaining ring (6) with an elastic preload.

## Revendications

1. Joint à rotule constitué de:
- un boîtier (1) avec une ouverture de réception (1.1),
- un coussinet (2) inséré à l'intérieur,
- un pivot sphérique (3) qui est monté dans le coussinet et qui est constitué de son côté d'une rotule (3.1), d'une partie conique (3.2), d'une zone de transition (3.3) entre la rotule et la partie conique ainsi que d'une zone de raccordement (3.4), la partie conique du pivot sphérique étant insérée au moins en partie dans une ouverture de réception (4.1) d'un composant (4) d'un véhicule automobile, ainsi que de
- un soufflet d'étanchéité (5) entre le boîtier et le pivot sphérique,
- un anneau de maintien (6) fixé fermement sur le pivot sphérique (3), qui reçoit à glissement entièrement la zone de bordure (5.1) côté pivot du soufflet d'étanchéité (5), et qui, vu en coupe transversale, présente approximativement la forme d'un F, par rapport à la ligne médiane du pivot sphérique, une branche axiale (6.1) étant orientée approximativement axialement et une branche radiale (6.2) approximativement radialement, et
la branche axiale (6.1) de l'anneau de maintien (6) présente une bride annulaire (6.4) périphérique au moins par endroits, qui s'engage dans la zone de bordure (5.1) complémentaire du soufflet d'étanchéité (5),
**caractérisé en ce que**
l'anneau de maintien (6) présente en supplément, sur la branche radiale (6.2), une bride annulaire (6.5) périphérique au moins par endroits, qui s'engage dans une rainure de réception (4.3) complémentaire du composant (4) du véhicule automobile.

2. Joint à rotule selon la revendication 1,
**caractérisé en ce que**
la branche radiale (6.2) prend appui sur la surface (4.2) du composant (4) du véhicule automobile.

3. Joint à rotule selon la revendication 1 ou 2,
**caractérisé en ce que**
la zone de contact (6.3) entre la branche radiale (6.2) et la zone de bordure (5.1) côté pivot du soufflet d'étanchéité (5) est une étanchéité à labyrinthe (5.2).

4. Joint à rotule selon l'une des revendications précédentes,
**caractérisé en ce que**
la branche axiale (6.1), s'appliquant contre le pivot sphérique (3), de l'anneau de maintien (6), vient s'appliquer, avec déformation élastique, au moins en partie contre la zone de transition (3.3) du pivot sphérique (3).

5. Joint à rotule selon l'une des revendications précédentes,
**caractérisé en ce que**
la zone de bordure (5.1) côté pivot du soufflet d'étanchéité (5) forme un bourrelet de matière renforcé qui presse avec précontrainte élastique contre l'anneau de maintien (6).
